(19) Europäisches Patentamt / European Patent Office / Office européen des brevets

(11) EP 4 737 240 A1

(12) **DEMANDE DE BREVET EUROPEEN**

(43) Date de publication:
06.05.2026 Bulletin 2026/19

(21) Numéro de dépôt: 25211737.9

(22) Date de dépôt: 28.10.2025

(51) Classification Internationale des Brevets (IPC):
**B60W 20/11** (2016.01)     **B60W 10/06** (2006.01)
**B60W 10/08** (2006.01)     **B60W 10/26** (2006.01)

(52) Classification Coopérative des Brevets (CPC):
**B60W 20/11; B60W 10/06; B60W 10/08; B60W 10/26;** B60W 2510/244; B60W 2510/248

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: 30.10.2024 FR 2411907

(71) Demandeur: Renault s.a.s
92100 Boulogne Billancourt (FR)

(72) Inventeurs:
• **LEFEVRE, Cédric**
91510 LARDY (FR)
• **POINTARD, Christophe**
91510 LARDY (FR)

(74) Mandataire: **Renault Group**
1, avenue du Golf
FR TCR AVA 4 4C
78084 Guyancourt Cedex (FR)

(54) **PROCÉDÉ D'OPTIMISATION DE LA CONSOMMATION ÉNERGÉTIQUE D'UN VÉHICULE HYBRIDE RECHARGEABLE**

(57) Ce procédé d'optimisation de la consommation énergétique d'un véhicule hybride comportant une chaîne cinématique comprenant un moteur thermique alimenté en carburant et au moins un moteur électrique alimenté par une batterie de traction rechargeable par une alimentation secteur comprend des étapes de :
- détermination de deux paramètres de coût,
- détermination de trois coefficients d'équivalence,
- pour chaque configuration possible de la chaîne cinématique du véhicule et à partir des trois coefficients d'équivalence, calcul des valeurs de trois fonctions d'optimisation,
- identification d'une configuration optimale de la chaîne cinématique à partir des valeurs calculées des trois fonctions d'optimisation, par une fonction d'arbitrage,
- sélection d'une consigne de configuration de la chaîne cinématique représentative de la configuration optimale de la chaîne cinématique, et
- commande de la chaîne cinématique de manière à respecter la consigne de configuration.

[Fig 2]

## Description

### Domaine technique

La présente invention concerne un procédé d'optimisation d'une consommation d'énergie d'un véhicule hybride rechargeable. L'invention concerne également un tel véhicule hybride rechargeable mettant en œuvre un tel procédé.

### Techniques antérieures

Un véhicule hybride rechargeable est muni d'un groupe motopropulseur comportant une chaîne de traction thermique conventionnelle comprenant un moteur à combustion interne alimenté par un réservoir de carburant, et une chaîne de traction électrique comprenant au moins un moteur électrique et une batterie de traction pouvant notamment être mise en charge sur une prise de courant.

Un tel véhicule hybride est susceptible d'être tracté ou propulsé par sa seule chaîne de traction électrique, ou par sa seule chaîne de traction thermique, ou encore simultanément par ses deux chaînes de traction thermique et électrique ce qui correspond à un mode hybride de fonctionnement du véhicule. Le choix d'utiliser une seule ou les deux chaînes de traction simultanément est réalisé par un système de gestion d'énergie.

De manière connue, la stratégie de gestion d'énergie la plus répandue consiste à systématiquement commencer par décharger la batterie de traction au début du trajet jusqu'à atteindre un niveau d'énergie minimal, puis à utiliser ensuite la chaîne de traction thermique. De cette manière, lorsque le conducteur réalise des trajets courts et qu'il a régulièrement la possibilité de recharger la batterie de traction, il utilise au maximum la chaîne de traction électrique, ce qui réduit les émissions polluantes du véhicule.

Une telle stratégie dite de « décharge-maintien » engendre des sollicitations de la batterie de traction qui peuvent être extrêmes et susceptibles d'altérer ses performances de façon prématurée.

De plus, cette stratégie de gestion n'est pas optimale car elle ne tient pas compte de la consommation d'énergie électrique. En effet, l'énergie électrique consommée par la chaîne de traction électrique vient, pour l'essentiel, de l'électricité puisée sur un réseau électrique lors des phases de recharge de la batterie de traction. Selon les modes de recharge dépendant notamment de la puissance de recharge et du type de courant (continu ou alternatif), cette électricité a un coût variable et peut avoir une incidence sur l'état de santé de la batterie sur le moyen et long terme.

### Exposé de l'invention

Afin de remédier aux inconvénients précités de l'état de la technique, la présente invention vise un procédé d'optimisation de la consommation énergétique d'un véhicule hybride tel que défini en introduction, permettant notamment de préserver la durabilité de la batterie de traction et d'optimiser la consommation énergétique de carburant et d'électricité nécessaire à mouvoir le véhicule, c'est-à-dire de minimiser le coût d'usage énergétique global.

L'invention a pour objet un procédé d'optimisation de la consommation énergétique d'un véhicule hybride comportant une chaîne cinématique comprenant un moteur thermique alimenté en carburant et au moins un moteur électrique alimenté par une batterie de traction rechargeable par une alimentation secteur.

Le procédé comprend des étapes successives de :

- détermination de deux paramètres de coût, à savoir un premier paramètre de coût représentatif d'un coût d'apport d'électricité et un deuxième paramètre de coût représentatif d'un coût d'apport de carburant,
- détermination de trois coefficients d'équivalence, à savoir un premier coefficient d'équivalence entre une consommation de carburant et une consommation électrique en fonction d'un niveau de charge de la batterie, un deuxième coefficient d'équivalence représentatif d'un endommagement de la batterie, et un troisième coefficient d'équivalence entre une consommation de carburant et une consommation électrique en fonction du niveau de charge de la batterie,

- pour chaque configuration possible de la chaîne cinématique du véhicule et à partir des trois coefficients d'équivalence, calcul des valeurs de trois fonctions d'optimisation, à savoir une première fonction représentative de la consommation de carburant, une deuxième fonction représentative d'une baisse de l'état de santé de la batterie et une troisième fonction représentative d'un coût d'usage énergétique global,
- identification d'une configuration optimale de la chaîne cinématique à partir des valeurs calculées des trois fonctions d'optimisation, par une fonction d'arbitrage,
- sélection d'une consigne de configuration de la chaîne cinématique représentative de la configuration optimale de la chaîne cinématique, et
- commande de la chaîne cinématique de manière à respecter la consigne de configuration.

Grâce à l'invention, il devient possible de commander la chaîne cinématique du véhicule hybride de manière à optimiser la consommation de carburant, à minimiser l'endommagement de la batterie de traction et à optimiser le coût d'usage énergétique global.

Avantageusement, la fonction d'arbitrage minimise le coût d'usage énergétique global. La consommation énergétique de carburant et d'électricité nécessaire à mouvoir le véhicule est ainsi optimisée.

De manière avantageuse, la fonction d'arbitrage minimise la baisse de l'état de santé de la batterie, permettant ainsi de préserver sa durabilité.

Selon une caractéristique, la fonction d'arbitrage minimise la consommation de carburant, permettant ainsi de réduire les émissions polluantes du véhicule.

Selon une autre caractéristique, la fonction d'arbitrage prend en compte une préférence d'un conducteur du véhicule et/ou des habitudes de recharge de la batterie et/ou des caractéristiques d'un trajet en cours ou planifié.

Avantageusement, le procédé comprend une étape supplémentaire de détection d'une nouvelle recharge de carburant et/ou d'électricité réalisée après l'étape d'estimation des deux paramètres de coût.

De préférence, le procédé comprend une étape supplémentaire de mise à jour des trois paramètres réalisée après la détection d'une nouvelle recharge de carburant et/ou d'électricité, dans laquelle on effectue une pondération entre des valeurs préalables représentatives du coût de carburant ou du coût de l'électricité avant la recharge et des valeurs de recharge représentatives de la recharge.

Par exemple, le deuxième coefficient d'équivalence comprend un premier terme représentatif de l'endommagement de la batterie produit par une dernière recharge et un deuxième terme représentatif de l'endommagement de la batterie produit par son utilisation courante.

Par exemple, le troisième coefficient d'équivalence dépend d'un état de vieillissement de la batterie.

Selon un autre aspect, l'invention a pour objet un véhicule hybride adapté pour mettre en œuvre un procédé tel que défini ci-dessus.

## Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] est une représentation schématique d'un véhicule hybride rechargeable selon un mode de réalisation de l'invention ;

[Fig 2] est un organigramme d'un procédé d'optimisation de la consommation énergétique d'un véhicule de la [Fig 1] selon un exemple de réalisation de l'invention ;

[Fig 3] illustre une fonction d'équivalence entre une consommation de carburant et une consommation électrique dépendant d'un état de charge d'une batterie ; et

[Fig 4] illustre une fonction d'équivalence entre une consommation de carburant et une consommation électrique sous forme de cartographie.

## Exposé détaillé d'au moins un mode de réalisation

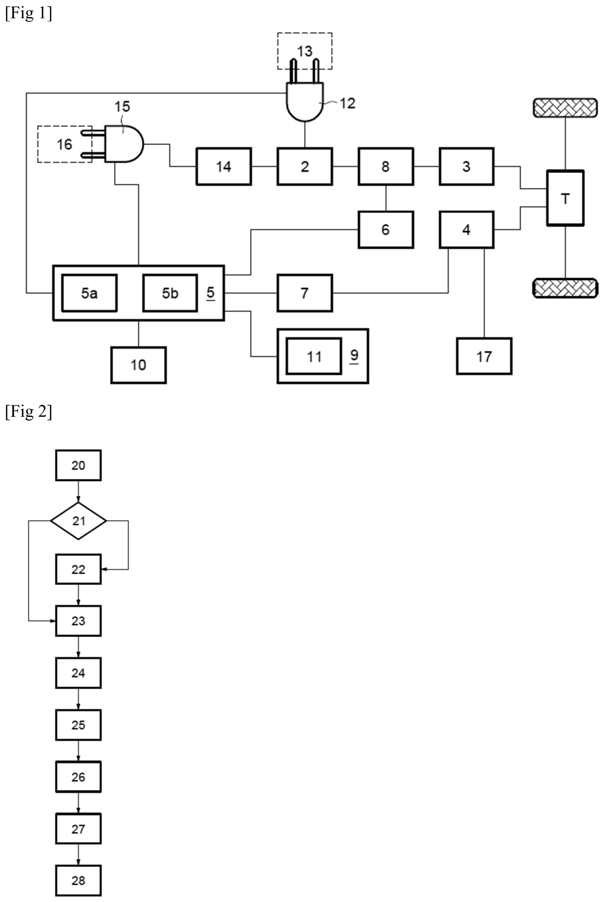

La figure 1 est une représentation schématique d'un véhicule hybride rechargeable muni d'une chaîne cinématique hybride équipant de nombreux véhicules de conception moderne. Ils ne nécessitent pour la plupart aucune modification ou pour le moins que des modifications mineures. En effet, des programmes mis en œuvre par les organes de commande du véhicule devront seulement être adaptés pour tenir compte des spécificités du procédé selon l'invention qui sera décrit par la suite.

Un véhicule 1 est équipé d'un stockeur d'énergie électrique tel qu'une batterie 2 de traction. La batterie 2 alimente en énergie électrique un moteur électrique 3, afin de compenser ou remplacer un moteur thermique 4 (i.e. un moteur à combustion interne), pour assurer la traction ou propulsion du véhicule 1 via une transmission T. Il reste bien entendu possible, de prévoir un véhicule 1 doté de plusieurs moteurs électriques 3 alimentés par une ou plusieurs batteries 2, sans sortir du cadre de l'invention.

Sur la figure 1, des liaisons électriques de données ou de puissance relient différents organes du véhicule. Les moteurs électrique 3 et thermique 4 sont reliés par des liaisons mécaniques. Ces liaisons mécaniques, de puissance et de données, ainsi que le fonctionnement des moteurs électrique 3 et thermique 4, ne diffèrent pas de l'art connu et ne seront pas décrits davantage.

Pour contrôler l'ensemble des organes du véhicule 1 et notamment les moteurs électrique 3 et thermique 4, le véhicule 1 comporte un système informatique 5 doté d'une mémoire 5a et de moyens de calcul 5b, tel qu'un microprocesseur par exemple. Ce système informatique 5 peut être un calculateur ou formé par plusieurs calculateurs. Le système informatique 5 est adapté pour commander les moteurs pour mouvoir le véhicule 1 selon une configuration optimale de la chaîne cinématique du véhicule 1 choisie selon le procédé de l'invention qui est décrit par la suite.

Par exemple, le système informatique 5 peut commander un fonctionnement en configuration hybride en série, en parallèle ou en parallèle-série. La configuration hybride en série correspond à un fonctionnement où le moteur thermique 4 entraîne un générateur qui recharge la batterie qui alimente le ou les moteurs électriques 3. La configuration hybride en parallèle correspond à une utilisation simultanée des moteurs thermique 4 et électrique 3 pour mouvoir le véhicule 1. La configuration hybride en parallèle-série correspond à une utilisation du moteur thermique 4 pour mouvoir le véhicule 1 et pour entraîner un générateur qui recharge la batterie 2 qui à son tour alimente le ou les moteurs électriques 3 qui contribuent à la traction ou propulsion du véhicule 1.

Enfin, le système informatique 5 peut commander pour mouvoir le véhicule 1 l'utilisation du seul ou des seuls moteurs électriques 3 ou l'utilisation du seul moteur thermique 4.

Le système informatique 5 commande d'une part, une unité de commande 6 du moteur électrique 3, et d'autre part, une unité de commande 7 du moteur thermique 4. Par exemple, l'unité de commande 6 commande le moteur électrique 3 via un onduleur 8 alimenté par la batterie 2.

De préférence, le véhicule 1 comporte en outre un système de navigation 9 associé à un dispositif d'affichage et de saisie de données tel qu'un écran 10 tactile. Par exemple, le système de navigation 9 est équipé d'un dispositif de navigation 11 muni d'un GPS.

Le système informatique 5 gère et mesure l'état de charge du stockeur d'énergie électrique, ici la batterie 2. Le véhicule 1 est de type hybride rechargeable et dispose de moyens permettant de recharger le stockeur d'énergie électrique, ici la batterie 2, par une alimentation secteur. Un premier moyen de recharge comporte une prise 12 de configuration adaptée, permettant de brancher directement la batterie 2 à une borne 13 de recharge rapide en courant continu, présente dans certains lieux de parking. Un deuxième moyen de recharge comporte un chargeur embarqué 14 muni d'une prise 15, permettant de brancher la batterie 2 à un réseau 16 électrique domestique d'une tension allant généralement de 110V à 220V.

Dans les deux cas, l'ordre de mise en charge de la batterie 2 est généré par le système informatique 5 et transmis à la prise 12, ou au chargeur embarqué 14.

Le véhicule 1 comporte également un réservoir d'énergie 17 pour alimenter le moteur thermique 4 en carburant.

La figure 2 correspond à un organigramme général d'un procédé d'optimisation de la consommation énergétique d'un véhicule 1 selon un exemple de réalisation.

Le procédé est notamment mis en œuvre par le système informatique 5.

Le procédé commence par une étape 20 de détermination de deux paramètres de coût, à savoir un premier paramètre noté €$_{élec}$ représentatif d'un coût d'apport d'électricité et un deuxième paramètre noté €$_{carb}$ représentatif d'un coût d'apport de carburant.

La détermination du premier paramètre €$_{élec}$ permet d'estimer le coût d'une recharge électrique et peut être réalisé de multiples façons. Par exemple, le premier paramètre peut être obtenu au travers d'un système de paiement automatisé géré via le véhicule 1. Selon un autre exemple, on peut utiliser une calibration prédéterminée disponible dans la mémoire 5a du système informatique 5 qui donne une estimation forfaitaire du premier paramètre €$_{élec}$ en fonction du type de courant et du niveau de puissance de recharge. Selon un autre exemple, on peut utiliser des données de géolocalisation couplées à des bases de données de prix. Selon un autre exemple, on peut obtenir le premier paramètre €$_{élec}$ par le biais du conducteur qui saisit un coût au kWh par l'intermédiaire de l'écran tactile 10.

La détermination du deuxième paramètre €$_{carb}$ permet d'estimer le coût d'une recharge de carburant et peut être réalisée elle aussi de plusieurs manières. Par exemple, le deuxième paramètre €$_{carb}$ peut être obtenu à partir des données de géolocalisation couplées à des bases de données de prix de vente de carburant. Selon un autre exemple, on peut obtenir le deuxième paramètre €$_{carb}$ par le biais du conducteur qui saisit un coût au litre par l'intermédiaire de l'écran tactile 10.

A noter que ces deux paramètres de coûts, notés €$_{élec}$ représentatif d'un coût d'apport d'électricité et €$_{carb}$ représentatif d'un coût d'apport de carburant, sont adimensionnés à la quantité d'énergie introduite, par exemple en un coût au kWh pour €$_{élec}$, et en un coût au litre (ou au kJ, ou au kWh de carburant) pour €$_{carb}$, les quantités d'énergie stockées pour ces deux sources étant identifiées au moment de la recharge électrique ou de la recharge de carburant par le système informatique 5 à partir d'informations reçues de différents capteurs du véhicule 1, tels que par exemple une jauge du niveau du réservoir 17 ou un système de management de la batterie 2.

Une fois déterminées, les valeurs des deux paramètres de coût sont stockées dans la mémoire 5a du système informatique 5 et sont ainsi disponibles pour des étapes ultérieures.

Il est à noter qu'en l'absence d'une nouvelle recharge de carburant et/ou d'électricité, les valeurs correspondantes de paramètres de coût ne changent pas.

Après l'étape 20, le procédé se poursuit par une étape de détection d'une nouvelle recharge de carburant et/ou d'électricité. La détection d'une nouvelle recharge de carburant et/ou d'électricité est réalisée par le système informatique 5 à partir d'informations reçues des différents capteurs du véhicule 1.

Si le système informatique 5 détecte une nouvelle recharge de carburant et/ou d'électricité, le procédé passe à une étape 22 de mise à jour des paramètres de coût. Lors de la mise à jour, on effectue une pondération entre d'une part, des valeurs préalables déjà déterminées lors de l'étape de détermination 20 qui sont représentatives du coût de carburant ou du coût de l'électricité avant la recharge et, d'autre part, des valeurs de recharge représentatives de la recharge. Les valeurs préalables sont disponibles depuis la mémoire 5a du système informatique 5. Autrement dit, le paramètre de coût de chaque source d'énergie (carburant ou électricité) est estimé à partir d'une moyenne pondérée entre le coût préalable de carburant ou d'électricité restante et le coût de l'apport ou de la recharge.

Après l'étape 22 de mise à jour ou si le système informatique 5 ne détecte aucune nouvelle recharge de carburant et/ou d'électricité, le procédé se poursuit par l'étape 23 de détermination de trois coefficients d'équivalence.

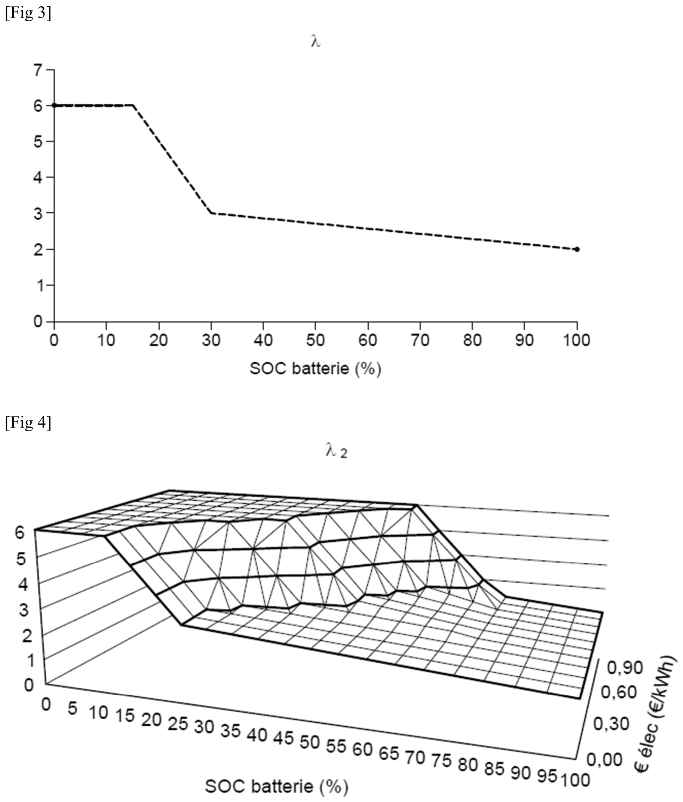

Le premier coefficient d'équivalence noté $\lambda$ est une fonction d'équivalence entre une consommation de carburant et une consommation électrique dépendant principalement de l'état de charge de la batterie 2, noté SOC pour « state of charge » en anglais (figure 3).

Ainsi, la valeur de $\lambda$ est d'autant plus importante que le SOC de la batterie 2 est faible. Inversement, la valeur de $\lambda$ est d'autant plus faible que le SOC de la batterie 2 est élevé.

Le deuxième coefficient d'équivalence noté $\lambda_1$ est représentatif de l'endommagement de la batterie de traction. Le deuxième coefficient $\lambda_1$ dépend notamment de la puissance de la dernière recharge de la batterie 2, des états de charge initial et final de la dernière recharge de la batterie 2 et de la température maximale de la batterie 2 atteinte lors de la dernière recharge de la batterie 2. Autrement dit, le deuxième coefficient $\lambda_1$ est un coefficient adimensionnel représentatif de l'endommagement de la batterie 2 notamment par sa recharge, connu dans l'art antérieur des systèmes de management des batteries ou BMS qui évaluent l'état de santé ou « state of health » des batteries de véhicules.

En variante, le coefficient $\lambda_1$ comprend un premier terme représentatif de l'endommagement de la batterie lors d'une dernière recharge et un deuxième terme représentatif de l'endommagement de la batterie lors d'un usage courant. Dans ce cas, il est possible de tenir compte de l'endommagement qui pourrait être causé par des conditions de décharge ou de recharge délétères, notamment en considérant la température de fonctionnement de la batterie 2.

Le troisième coefficient d'équivalence noté $\lambda_2$ est une fonction d'équivalence entre une consommation de carburant et une consommation électrique. Le troisième coefficient d'équivalence $\lambda_2$ peut par exemple être exprimé en fonction du niveau de charge de la batterie 2 et du premier paramètre €$_{\text{élec}}$.

Par exemple, le troisième coefficient d'équivalence $\lambda_2$ est prédéterminé et stocké dans la mémoire 5a du système informatique 5 sous forme de table ou cartographie (figure 4).

Dans l'exemple illustré sur la figure 4, le troisième coefficient d'équivalence $\lambda_2$ a des valeurs identiques à celles du premier coefficient d'équivalence $\lambda$ lorsque le coût électrique est inférieur ou égal par exemple ici à 0,20 €/kWh. Autrement dit, pour un coût très faible de l'électricité, l'optimisation de la consommation énergétique va à la fois minimiser la consommation de carburant et le coût d'usage énergétique global, puisque les deux vont alors de pair. Pour des coûts électriques plus importants, par exemple en cas de recharge rapide en courant continu, la valeur du troisième coefficient d'équivalence $\lambda_2$ augmente pour des valeurs de SOC inférieures ici à 80%. Cela signifie qu'avec une batterie pleine ou dont l'état de charge est supérieur à 80%, on priorise la consommation électrique de manière à faire baisser le SOC, de manière à ensuite pouvoir récupérer de l'énergie au freinage. Lorsque le SOC est inférieur à 80%, plus l'énergie électrique a coûté cher et moins on tend à l'utiliser puisqu'elle revient in fine plus cher, pour un même travail fourni, que le carburant.

En variante, il est possible de prévoir que le troisième coefficient d'équivalence $\lambda_2$ dépend également d'un état de vieillissement de la batterie 2, de manière à garantir que l'optimisation de la consommation énergétique reste performante tout au long de la vie de la batterie 2.

Après la détermination des trois coefficients d'équivalence, le système informatique 5 calcule, pour chaque configuration possible de la chaîne cinématique du véhicule 1 et à partir des trois coefficients d'équivalence, des valeurs de trois fonctions d'optimisation (étape 24).

La première fonction d'optimisation calculée est notée H et est représentative de la consommation de carburant. Elle s'exprime selon l'équation 1 suivante :

$$H = \dot{m}_f + \lambda * P_{\text{élec}} \qquad (\text{Eq.1})$$

où :

$\dot{m}_f$ est le débit de carburant en g/s,
$\lambda$ est le premier coefficient d'équivalence entre des litres de carburant et des kilowattheures d'électricité, et
$P_{\text{élec}}$ est la puissance électrique en W.

Il est à noter que le débit de carburant peut être exprimé en unités de puissance au travers du pouvoir calorifique inférieur PCI du carburant, ou à l'inverse on peut exprimer la puissance électrique en unités du débit carburant.

La deuxième fonction d'optimisation calculée est notée $H_1$ et est représentative d'une baisse de l'état de santé de la batterie 2, ou SOH pour « state of health » en anglais. Elle s'exprime selon l'équation 2 suivante :

$$H_1 = \dot{m}_f + \lambda_1 * P_{\text{élec.}} \qquad (Eq.2)$$

où :

$\dot{m}_f$ est le débit de carburant en g/s,
$\lambda_1$ est le deuxième coefficient d'équivalence entre des kilowattheures d'électricité et des litres de carburant, adimensionnel, et
$P_{\text{élec}}$ est la puissance électrique en W.

Il est à noter que $\lambda_1$ est représentatif de l'endommagement subi par la batterie lors de sa dernière recharge, qui dépend notamment de la vitesse de recharge et du type de courant utilisé pendant la recharge, des niveaux de charge initiale et finale, et de la température maximale de la batterie 2 atteinte pendant la recharge.

En variante, $\lambda_1$ peut comprendre un terme supplémentaire représentatif de l'endommagement courant de la batterie 2 produit par de son utilisation. Le terme supplémentaire peut par exemple dépendre de l'état de charge (SOC) et/ou de la température courante de la batterie 2 si ceux-ci s'avèrent critiques pour la durabilité de la batterie 2.

La troisième fonction d'optimisation calculée est notée $H_2$ et est représentative d'un coût d'usage énergétique global. Elle s'exprime selon l'équation 3 suivante :

$$H_2 = \text{€}_{\text{carb.}} * \dot{m}_f + \text{€}_{\text{élec.}} * \lambda_2 * P_{\text{élec.}} \qquad (Eq.3)$$

où :

$\text{€}_{\text{carb.}}$ est le deuxième paramètre de coût exprimé en €/L,
$\text{€}_{\text{elec.}}$ est le premier paramètre de coût exprimé en €/kWh,
$\dot{m}_f$ est le débit de carburant en g/s,
$\lambda_2$ est le troisième coefficient d'équivalence, adimensionnel, et
$P_{\text{élec}}$ est la puissance électrique en W.

Dans ce cas, $\lambda_2$ est dépendant de l'état de charge SOC de la batterie 2.

En variante, il est possible d'intégrer le premier paramètre de coût $\text{€}_{\text{élec.}}$ au sein de la valeur du troisième coefficient d'équivalence $\lambda_2$ et de diviser le deuxième paramètre de coût $\text{€}_{\text{carb.}}$ par un coût de référence noté $\text{€}_{\text{carb. de référence}}$, de sorte à écrire l'équation 4 suivante :

$$H_2 = (\text{€}_{\text{carb.}} / \text{€}_{\text{carb de référence}}) * \dot{m}_f + \lambda_2 * P_{\text{élec.}} \qquad (Eq.4)$$

où :
$\text{€}_{\text{carb.}}$ de référence est un paramètre prédéterminé représentatif d'un coût forfaitaire de carburant en €/L.
Dans ce cas, $\lambda_2$ est dépendant du premier paramètre de coût $\text{€}_{\text{elec.}}$ et de l'état de charge SOC de la batterie 2.

Après l'étape 24 de calcul des fonctions d'optimisation, le procédé se poursuit par une étape 25 d'identification d'une configuration optimale de la chaîne cinématique à partir des valeurs calculées des trois fonctions d'optimisation en utilisant une fonction d'arbitrage. Plus précisément, il s'agit d'identifier un jeu de réglages représentatifs d'un état optimal de la chaîne cinématique et des consignes de régime et de couple pour chacun des moteurs thermique 4 et électriques 3.

En effet, en fonction des valeurs calculées pour chacune des trois fonctions d'optimisation, il peut résulter jusqu'à trois jeux de réglages optimisant respectivement la consommation de carburant (fonction H), la durabilité de la batterie (fonction $H_1$) et le coût d'usage énergétique global (fonction $H_2$). La fonction d'arbitrage permet de choisir le jeu de réglages considéré comme optimal.

Par exemple, si les résultats des trois fonctions d'optimisation convergent vers une même solution, la fonction d'arbitrage choisit cette solution commune.

Par exemple, si les résultats des trois fonctions d'optimisation parviennent à deux solutions mais qu'une de ces solutions ne permet qu'un faible gain en matière de consommation mais dégrade fortement la durabilité ou le coût d'usage énergétique global (ou inversement), la fonction d'arbitrage permet de choisir l'autre solution qui serait dans ce cas la solution optimale.

De manière générale, la fonction d'arbitrage permet de choisir parmi les résultats des fonctions d'optimisation de plusieurs manières.

Par exemple, la fonction d'arbitrage prend en compte une préférence du conducteur qui peut manifester sa volonté en sélectionnant un mode de conduite préféré, tel qu'un mode donnant la priorité à une traction électrique, ou un mode privilégiant le chargement de la batterie, ou encore un mode économique qui donne la préférence à l'optimisation du coût d'usage énergétique global.

Par exemple, la fonction d'arbitrage prend en compte des caractéristiques d'un trajet en cours ou planifié dans le système de navigation 11. Ainsi, lorsque le véhicule est doté d'une fonction d'anticipation du trajet, il devient possible d'optimiser le fonctionnement de la chaîne cinématique selon les zones traversées et d'utiliser de préférence un mode électrique en ville et un mode thermique sur autoroute.

Par exemple, la fonction d'arbitrage prend en compte des habitudes de recharge de la batterie 2. Ainsi, si on a mémorisé que le véhicule est très fréquemment rechargé à un coût d'électricité bas en un lieu donné (domicile, travail, etc.), la fonction d'arbitrage peut juger plus favorable de dépenser l'énergie électrique de la batterie 2 pour permettre sa recharge à un coût bas sur ce lieu donné.

Après l'identification de la configuration optimale par la fonction d'arbitrage, le système informatique 5 sélectionne une consigne de configuration de la chaîne cinématique représentative de la configuration optimale de la chaîne cinématique (étape 26). La consigne de configuration ou d'état de la chaîne cinématique est accompagnée d'une consigne de régime et de couple des moteurs thermique 4 et électriques 3.

Le système informatique 5 commande ensuite la chaîne cinématique de manière à respecter la consigne de configuration et la consigne de régime et de couple (étape 27).

Après l'étape 27 de commande, le procédé prend fin par une étape 28 d'affichage d'un message sur l'écran 10 à destination du conducteur de manière à lui présenter des informations utiles relatives à l'optimisation de la consommation énergétique du véhicule 1 et/ou à l'optimisation de la durabilité de la batterie 2.

Par exemple, le message peut inciter le conducteur à recharger en électricité à une borne rapide uniquement lorsque le ratio coût carburant / électricité le justifie.

Par exemple, le message peut inciter le conducteur à recharger en électricité sur des lieux où la recharge préserve la durabilité de la batterie 2 et/ou l'électricité est relativement peu chère.

## Revendications

1. Procédé d'optimisation de la consommation énergétique d'un véhicule (1) hybride comportant une chaîne cinématique comprenant un moteur thermique (4) alimenté en carburant et au moins un moteur électrique (3) alimenté par une batterie (2) de traction rechargeable par une alimentation secteur, **caractérisé en ce qu'**il comprend des étapes successives de :

   - détermination de deux paramètres de coût, à savoir un premier paramètre de coût ($€_{élec}$) représentatif d'un coût d'apport d'électricité et un deuxième paramètre de coût ($€_{carb}$) représentatif d'un coût d'apport de carburant,
   - détermination de trois coefficients d'équivalence, à savoir un premier coefficient d'équivalence ($\%\lambda$) entre une consommation de carburant et une consommation électrique en fonction d'un niveau de charge de la batterie (2), un deuxième coefficient d'équivalence ($\%\lambda_1$) représentatif d'un endommagement de la batterie (2), et un troisième coefficient d'équivalence ($\lambda_2$) entre une consommation de carburant et une consommation électrique en fonction du niveau de charge de la batterie (2) et du premier paramètre de coût ($€_{élec}$),
   - pour chaque configuration possible de la chaîne cinématique du véhicule et à partir des deux paramètres de coût, calcul des valeurs de trois fonctions d'optimisation, à savoir une première fonction (H) représentative de la consommation de carburant, une deuxième fonction ($H_1$) représentative d'une baisse de l'état de santé de la batterie et une troisième fonction ($H_2$) représentative d'un coût d'usage énergétique global, le calcul de la première, deuxième et troisième fonction étant fait respectivement à partir du premier, du deuxième et du troisième coefficient d'équivalence,
   - identification d'une configuration optimale de la chaîne cinématique à partir des valeurs calculées des trois fonctions d'optimisation, par une fonction d'arbitrage,
   - sélection d'une consigne de configuration de la chaîne cinématique représentative de la configuration optimale de la chaîne cinématique, et
   - commande de la chaîne cinématique de manière à respecter la consigne de configuration.

2. Procédé selon la revendication 1, dans lequel la fonction d'arbitrage minimise le coût d'usage énergétique global.

3. Procédé selon la revendication 1 ou 2, dans lequel la fonction d'arbitrage minimise la baisse de l'état de santé de la batterie (2).

4. Procédé selon l'une des revendications 1 à 3, dans lequel la fonction d'arbitrage minimise la consommation de carburant.

5. Procédé selon l'une des revendications 1 à 4, dans lequel la fonction d'arbitrage prend en compte une préférence d'un conducteur du véhicule (1) et/ou des habitudes de recharge de la batterie (2) et/ou des caractéristiques d'un trajet en cours ou planifié.

6. Procédé selon l'une quelconque des revendications 1 à 5, comprenant une étape supplémentaire de détection d'une nouvelle recharge de carburant et/ou d'électricité réalisée après l'étape d'estimation des deux paramètres de coût.

7. Procédé selon la revendication 6, comprenant une étape supplémentaire de mise à jour des deux paramètres de coût réalisée après la détection d'une nouvelle recharge de carburant et/ou d'électricité, dans laquelle on effectue une pondération entre des valeurs préalables représentatives du coût de carburant ou du coût de l'électricité avant la recharge et des valeurs de recharge représentatives de la recharge.

8. Procédé selon l'une quelconque des revendications 1 à 7, dans lequel le deuxième coefficient d'équivalence ($\lambda_1$) comprend un premier terme représentatif de l'endommagement de la batterie (2) produit par une dernière recharge et un deuxième terme représentatif de l'endommagement de la batterie (2) produit par son utilisation courante.

9. Procédé selon l'une quelconque des revendications 1 à 8, dans lequel le troisième coefficient d'équivalence ($\lambda_2$) dépend d'un état de vieillissement de la batterie.

10. Véhicule hybride adapté pour mettre en œuvre un procédé selon l'une quelconque des revendications 1 à 9.

[Fig 1]

[Fig 2]

[Fig 3]

λ

SOC batterie (%)

[Fig 4]

λ$_2$

SOC batterie (%)

€ élec (€/kWh)

**Europäisches Patentamt**
**European Patent Office**
**Office européen des brevets**

## RAPPORT DE RECHERCHE EUROPEENNE

Numéro de la demande

EP 25 21 1737

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 857 271 A2 (MAN TRUCK & BUS AG [DE]) 8 avril 2015 (2015-04-08) | 1-7,9,10 | INV. B60W20/11 |
| A | * figures 1-4 * * alinéas [0003], [0009], [0013] - [0014], [0020], [0032], [0036] * * le document en entier * | 8 | B60W10/06 B60W10/08 B60W10/26 |
| A | CN 112 231 830 A (UNIV ZHEJIANG) 15 janvier 2021 (2021-01-15) * figures 1-9 * * le document en entier * ----- | 1,10 | |
| A | EP 3 878 706 A1 (AVL POWERTRAIN UK LTD [GB]) 15 septembre 2021 (2021-09-15) * figures 1-18 * * alinéas [0003], [0045] - [0046], [0059] * * le document en entier * ----- | 1,10 | |
| A | DE 10 2013 220935 A1 (BOSCH GMBH ROBERT [DE]) 16 avril 2015 (2015-04-16) * figures 1-4 * * le document en entier * ----- | 1,10 | **DOMAINES TECHNIQUES RECHERCHES (IPC)** B60W |

Le présent rapport a été établi pour toutes les revendications

| Lieu de la recherche | Date d'achèvement de la recherche | Examinateur |
|---|---|---|
| Munich | 31 octobre 2025 | Dubreuil, Cédric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 21 1737

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-10-2025

| Document brevet cité au rapport de recherche | Date de publication | Membre(s) de la famille de brevet(s) | Date de publication |
|---|---|---|---|
| EP 2857271 A2 | 08-04-2015 | BR 102014014713 A2<br>CN 104670219 A<br>DE 102013016569 A1<br>EP 2857271 A2 | 10-02-2016<br>03-06-2015<br>09-04-2015<br>08-04-2015 |
| CN 112231830 A | 15-01-2021 | AUCUN | |
| EP 3878706 A1 | 15-09-2021 | AUCUN | |
| DE 102013220935 A1 | 16-04-2015 | AUCUN | |

EPO FORM P0460

Pour tout renseignement concernant cette annexe : voir Journal Officiel de l'Office européen des brevets, No.12/82